# EUROPEAN PATENT APPLICATION

(11) **EP 4 769 774 A1**
(43) Date of publication of application: **01.07.2026**
(21) Application number: 25845045.1
(22) Date of filing: 10.07.2025
(51) Int. Cl.: H01M 50/383, H01M 50/30, H01M 50/211, H01M 50/249

(54) **BATTERY PACK AND VEHICLE INCLUDING SAME**

(30) Priority: 24.07.2024 KR 20240097948
(71) Applicant: LG Energy Solution, Ltd., Seoul 07335 (KR)
(72) Inventor: YUN, Hyun-Seop, Daejeon 34122 (KR); JUNG, Hye-Mi, Daejeon 34122 (KR)
(74) Representative: BCKIP Part mbB
(86) International application number: PCT/KR2025/010064
(87) International publication number: WO 2026/023948

(57) **Abstract**

The present disclosure provides a battery pack including: a plurality of battery cells; a pack case configured to accommodate the plurality of battery cells and having a venting device provided on at least one side to discharge venting gas generated from the battery cell to the outside; and a cover member configured to at least partially cover the venting device and having multiple through-holes formed to allow the venting gas to pass therethrough, wherein an area of the multiple through-holes is configured to at least partially vary.

## Description

### TECHNICAL FIELD

The present disclosure relates to a battery pack and a vehicle including the same.

This application is based on and claims priority from Korean Patent Application No. 10-2024-0097948, filed on July 24, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

A common method for configuring a battery pack by connecting multiple battery cells in series/parallel is performed by preferentially configuring a battery module including one or more battery cells and then by adding other components to one or more battery modules to configure a battery pack or battery rack. Alternatively, a battery pack has recently been manufactured in a cell-to-pack type in which multiple battery cells are directly stored in a pack housing, instead of being modularized.

When a thermal event, such as thermal runaway, occurs within a battery pack, gas may be emitted from the battery cells stored therein, and this gas may include flames. In addition, when gas is emitted from the battery cell, electrode plate particles or active material particles may be heated within the battery cell to high temperatures and discharged to the outside. These high-temperature particles may appear in the form of sparks.

In conventional battery packs, when an abnormality occurs in a specific battery cell or battery module, high-temperature gases are often vented to the outside of a pack case through a venting unit installed in the pack case.

In this case, when sparks are exposed to the outside of the pack case along with the gas, they may react with oxygen outside the battery pack, potentially creating or developing a flame. In addition, when a flame or fire occurs outside a specific battery pack, it may spread to adjacent battery packs or devices equipped with the battery pack, potentially causing a more serious problem.

Therefore, there is a growing need for technology that prevents sparks or flames from being released through the venting unit to the outside of the battery pack, thereby suppressing the occurrence or spread of flames or fires outside the battery pack.

### DISCLOSURE

### Technical Problem

The present disclosure is designed to solve the problems of the related art, and therefore the present disclosure is directed to providing a battery pack capable of ensuring safety and reliability in the event of an abnormality of a battery cell or battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case configured to accommodate the plurality of battery cells and having a venting device provided on at least one side to discharge venting gas generated from the battery cell to an outside; and a cover member configured to at least partially cover the venting device and having multiple through-holes formed to allow the venting gas to pass therethrough, wherein an area of the multiple through-holes is configured to at least partially vary.

The cover member may be configured to suppress movement of sparks generated from the battery cell toward the venting device.

The cover member may be configured such that the area of the multiple through-holes increases due to pressure of the venting gas.

The cover member may be configured to be stretchable due to pressure of the venting gas.

The cover member may be configured to stretch and at least partially expand toward the venting device.

The cover member may be provided between the plurality of battery cells and the venting device.

The pack case may include a base frame on which the plurality of battery cells are seated, and a side frame extending upward from the base frame and having the venting device, and the cover member may be configured to face the side frame having the venting device.

The cover member may include a stretching portion configured to form the multiple through-holes, and a fixing portion configured to secure the stretching portion.

The stretching portion may be configured in a mesh form.

The cover member may be configured such that the density of the multiple through-holes at least partially varies gradually.

The cover member may be configured such that the density of the multiple through-holes at least partially increases from bottom to top.

The battery pack according to an embodiment of the present disclosure may further include a module case configured to accommodate the plurality of battery cells in an inner space and having a venting hole formed at a top to communicate with the inner space.

The pack case may include a pack lid configured to cover a top of the plurality of battery cells, and the cover member may be configured to be connectable to the pack lid.

At least one side of the cover member may be configured to be bent toward an inner surface of the pack case.

According to another aspect of the present disclosure, there is provided a vehicle including a battery pack according to the present disclosure.

### Advantageous Effects

According to one aspect of the present disclosure, it is possible to quickly discharge high-temperature gases generated within the battery cell to the outside of the pack case in the event of an abnormality in a specific battery cell or battery module within a battery pack. Therefore, by minimizing thermal damage to other battery cells or battery modules, additional ignition chain reactions may be prevented.

In addition, according to one aspect of the present disclosure, sparks generated in the event of an abnormality of a battery cell may be prevented from being exposed to the outside of the pack case, thereby ensuring safety and reliability.

In addition, according to one aspect of the present disclosure, it is possible to effectively prevent thermal propagation between packs by suppressing flame development outside the battery pack.

This may prevent or delay thermal runaway events, such as fires or explosions, in battery packs including multiple battery modules or in devices equipped with them.

In particular, in electric vehicles, by suppressing or delaying the propagation of thermal runaway between battery cells or battery modules, it is possible to secure sufficient time for occupants to escape or continue driving.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a drawing illustrating a cover member included in a battery pack according to an embodiment of the present disclosure.
FIG. 4 is a partially cross-sectional view of a battery pack according to an embodiment of the present disclosure, which may be a cross-sectional view taken along line I - I' in FIG. 1.
FIG. 5 is a drawing illustrating a state where a cover member included in a battery pack is stretched according to an embodiment of the present disclosure.
FIG. 6 is a partially cross-sectional view illustrating a state where a cover member included in a battery pack is stretched according to an embodiment of the present disclosure.
FIG. 7 is a front perspective view of a cover member included in a battery pack according to an embodiment of the present disclosure.
FIG. 8 is a front perspective view illustrating a state where a cover member included in a battery pack is stretched according to an embodiment of the present disclosure.
FIG. 9 is a rear perspective view illustrating a state where a cover member included in a battery pack is stretched according to an embodiment of the present disclosure.
FIG. 10 is a front view of a cover member included in a battery pack according to another embodiment of the present disclosure.
FIG. 11 is a front view illustrating a state where a cover member included in a battery pack is stretched according to another embodiment of the present disclosure.
FIG. 12 is a drawing illustrating the direction in which venting gas and sparks are emitted within a battery pack according to another embodiment of the present disclosure.
FIG. 13 is a partially cross-sectional view of a battery pack according to another embodiment of the present disclosure, which may be a cross-sectional view taken along line I - I' in FIG. 1.
FIG. 14 is a cross-sectional view of a battery pack when viewed from above according to another embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

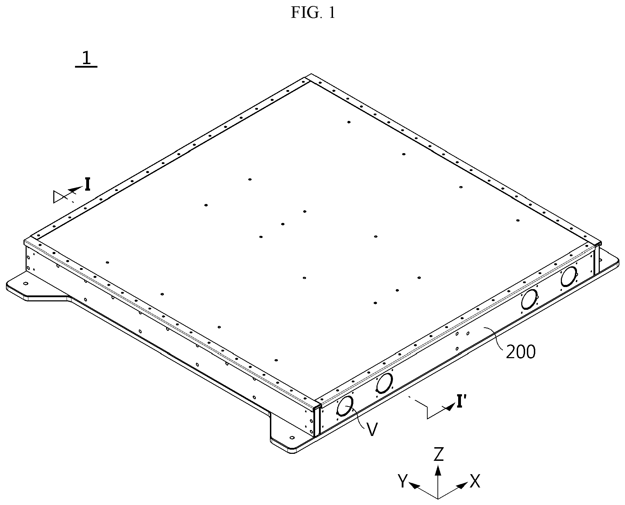

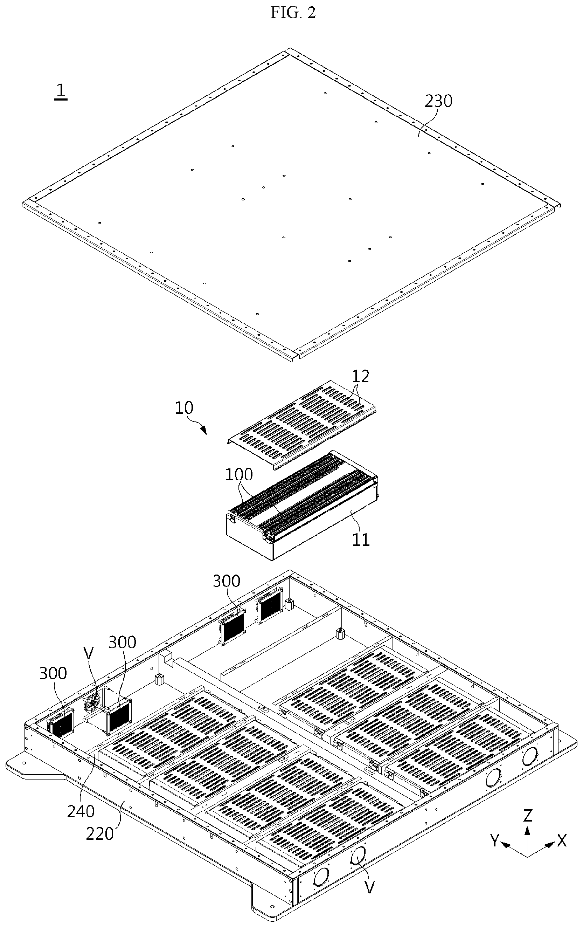

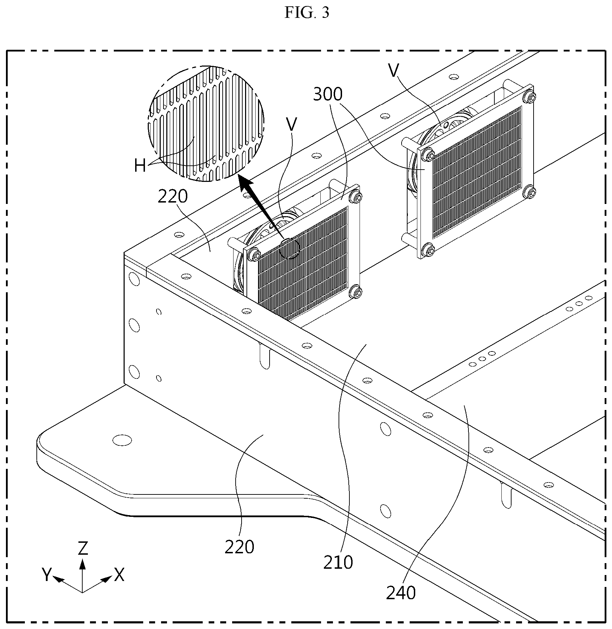

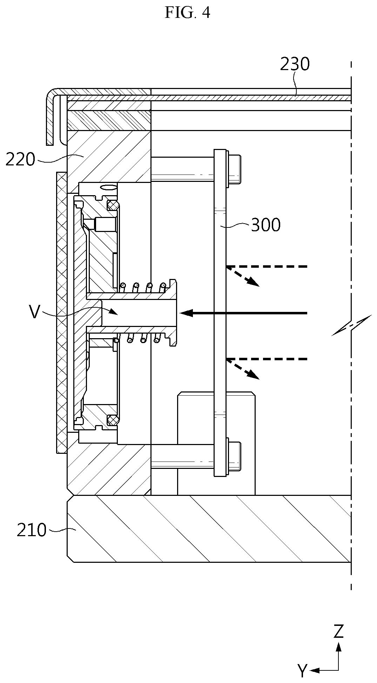

FIG. 1 is an overall perspective view of a battery pack according to an embodiment of the present disclosure, FIG. 2 is an exploded perspective view of a battery pack according to an embodiment of the present disclosure, and FIG. 3 is a drawing illustrating a cover member included in a battery pack according to an embodiment of the present disclosure. In addition, FIG. 4 is a partially cross-sectional view of a battery pack according to an embodiment of the present disclosure, which may be a cross-sectional view taken along line I - I' in FIG. 1.

Referring to FIGS. 1 through 4, a battery pack 1 according to an embodiment of the present disclosure includes a battery cell 100, a pack case 200, and a cover member 300.

Referring to FIG. 2, the battery pack may include a plurality of battery cells 100. In addition, although not shown in the drawings, the plurality of battery cells 100 may include an electrode assembly, a cell case accommodating the electrode assembly, and electrode leads connected to the electrode assembly and extending outward from the cell case to function as electrode terminals. In this case, the plurality of battery cells 100 may be electrically connected to each other.

The battery cell 100 may be a pouch-type secondary battery. A cell case of the pouch-type secondary battery may be configured as a pouch in which a metal layer made of aluminum is interposed between polymer layers.

As illustrated in FIG. 2, the plurality of battery cells 100 may be arranged side by side in the front-back direction (Y-axis direction) while standing in the vertical direction (Z-axis direction). In this case, each battery cell 100 may have a sealing portion facing the left-right direction (X-axis direction) and up-down direction (Z-axis direction), and a storage portion facing the front-back direction (Y-axis direction).

Meanwhile, the present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to accommodate a plurality of battery cells 100. That is, the pack case 200 may provide an accommodation space to accommodate a plurality of battery cells 100.

The pack case 200 may be made of a material capable of securing mechanical strength, such as metal, for example, steel or SUS, or plastic, or may include such a material in order to safely protect the battery cells 100 stored therein.

In addition, the pack case 200 may include a venting device V. The venting device V may be configured to discharge gas generated from the battery cell 100 stored inside to the outside of the pack case 200. The venting device V may be provided on at least one side of the pack case 200.

The venting device V may be configured in the form of a hole penetrating through the pack case 200 from the inside to the outside. Alternatively, the venting device V may be configured to be mounted in the hole of the pack case 200 and to operate when venting gas is generated within the pack case 200.

For example, the venting device V may include a venting valve or be implemented as such a venting valve. In this case, a mounting hole may be formed on at least one side of the pack case 200 so that the venting device V may be mounted in the mounting hole. In the case where the venting device V includes a venting valve or is implemented as such a venting valve, the venting valve may be configured to open when the internal pressure of the pack case 200 increases, thereby discharging the venting gas to the outside of the pack case 200.

Referring to FIG. 3, the cover member 300 may be configured to at least partially cover the venting device V. For example, as disclosed in the embodiment illustrated in FIG. 3, the cover member 300 may have a structure that covers the entire venting device V.

In addition, referring to FIG. 4, the cover member 300 may be configured to prevent sparks generated from the battery cell 100 from moving toward the venting device V.

Sparks or flames having a strong tendency to move straight may be emitted from the battery cell 100, collide with the internal structure of the pack case 200, and then move toward the venting device V. According to the above-implemented configuration of the present disclosure, the cover member 300 may prevent the sparks from being discharged outside the pack case 200 (see the dotted arrows in FIG. 4). Accordingly, it is possible to prevent the sparks and oxygen from reacting outside the pack case 200 to generate flames.

The cover member 300 may be made of a material with low thermal conductivity and excellent heat and/or fire resistance. For example, the cover member 300 may be made of a metal material with strength and heat resistance, such as SUS.

In addition, the cover member 300 may be configured to allow venting gas to pass therethrough. More specifically, the cover member 300 may be have a through-hole H formed therein. Multiple through-holes H may be provided. The through-holes H may be configured to allow venting gas to pass therethrough. Referring to the solid arrow illustrated in FIG. 4, the venting gas may be discharged from the inside of the pack case 200 toward the venting device V through the multiple through-holes H.

That is, the cover member 300 may be configured to filter sparks or flames while allowing venting gas to pass therethrough. In this case, sparks generated from the battery cell 100 may be blocked by the cover member 300, while allowing venting gas to be smoothly discharged through the multiple through-holes H.

According to the above-implemented configuration of the present disclosure, when a specific battery cell 100 inside the battery pack 1 experiences an abnormality, high-temperature venting gas generated from the battery cell 100 may be quickly discharged to the outside of the pack case 200 through the through-holes H. Furthermore, according to the above-implemented configuration of the present disclosure, the through-holes H may be designed differently depending on the amount of venting gas, thereby minimizing thermal damage to other battery cells 100 and preventing additional chain ignition. Therefore, according to the above-implemented configuration of the present disclosure, the safety and reliability of the battery pack 1 may be guaranteed.

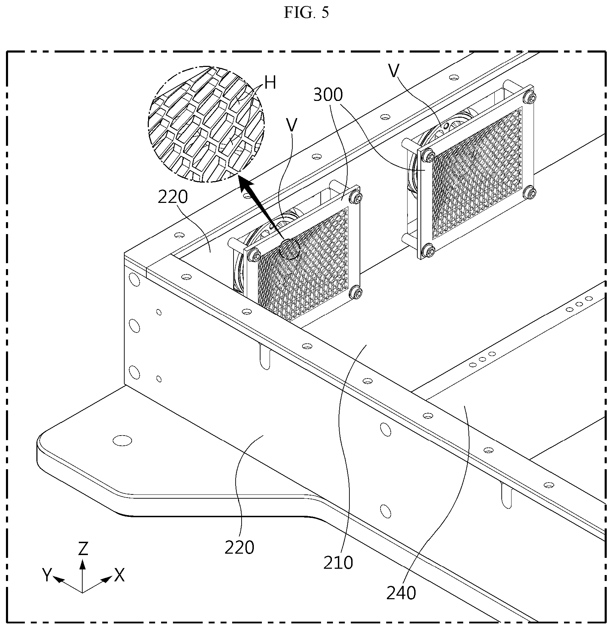

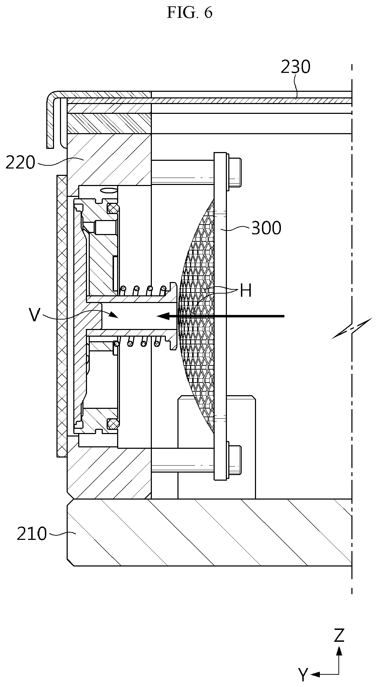

FIG. 5 is a drawing illustrating a state where a cover member included in a battery pack is stretched according to an embodiment of the present disclosure, and FIG. 6 is a partially cross-sectional view illustrating a state where a cover member included in a battery pack is stretched according to an embodiment of the present disclosure.

Further referring to FIGS. 5 and 6, the cover member 300 may be configured such that the area of the multiple through-holes H at least partially varies. The area of the through-hole H may be configured to vary as venting gas or the like passes through the through-hole H. The area of the through-hole H may be configured to vary depending on the amount of venting gas passing through it. For example, as disclosed in the embodiment illustrated in FIGS. 5 and 6, the area of at least some of the multiple through-holes H may vary as the venting gas passes through the through-holes H

According to the above-implemented configuration of the present disclosure, since the area of the through-hole H may be varied, the area of the through-hole H may be adjusted depending on the internal pressure of the pack case 200. As a result, when the internal pressure of the pack case 200 increases, a larger amount of venting gas may be discharged to the outside.

Therefore, in the event of an abnormality in the battery cell 100, the venting gas may be quickly discharged to the outside of the pack case 200 through the venting device V, thereby preventing an increase in the internal pressure of the pack case 200 and preventing additional chain ignition in other battery cells 100.

In particular, the cover member 300 may be configured such that the area of the multiple through-holes H increases due to the pressure of the venting gas.

As described above, the cover member 300 may be configured to filter sparks or flames while allowing venting gas to pass therethrough. In this case, sparks larger than the through-hole H may be blocked by the cover member 300, but sparks similar in size to the through-hole H may block the through-hole H. In such a case, some of the multiple through-holes H may become clogged, thereby increasing the internal pressure of the pack case 200.

However, according to the above-implemented configuration of the present disclosure, the risk of sparks blocking the through-holes H may be minimized by increasing the area of the through-hole H. This allows the venting gas to be discharged more smoothly through the through-hole H. Therefore, in the event of an abnormality in the battery cell 100, the venting gas may be quickly discharged to the outside of the pack case 200 through the venting device V, thereby preventing an increase in internal pressure of the pack case 200 and preventing additional chain ignition in other battery cells 100.

More specifically, referring to FIGS. 5 and 6, the cover member 300 may be configured to stretch in response to the pressure of the venting gas. That is, the cover member 300 may be configured such that the pressure of the venting gas pushes the cover member 300 outward.

The cover member 300 may include a stretchable material. The cover member 300 may be configured to be elastic. The cover member 300 may be configured to be flexible. In this case, the elongation of the cover member 300 may be designed in consideration of the shape of the pack case 200 or venting device V.

The cover member 300 may be configured to stretch outward. For example, the cover member 300 may be configured to stretch and at least partially expand toward the venting device V.

According to the above-implemented configuration of the present disclosure, since the cover member 300 is configured to be stretchable, the area of the through-hole H may naturally increase.

Meanwhile, referring to FIG. 2, the pack case 200 according to an embodiment of the present disclosure may include a base frame 210 and a side frame 220.

The base frame 210 may form the bottom of the pack case 200 and may be configured as a rectangular plate. The base frame 210 may be configured to allow a plurality of battery cells 100 to be seated thereon. In addition, the base frame 210 may have a flat upper surface to allow the plurality of battery cells 100 or module cases 11 to be stably seated thereon.

The side frame 220 may extend upward from respective edges of the base frame 210. The side frame 220 may have a plurality of unit walls to surround the plurality of battery cells 100 or battery modules 10. More specifically, the side frame 220 may include a rear wall located at the +Y-direction end of the base frame 210, a right wall located at the +X-direction end, a front wall located at the -Y-direction end, and a left wall located at the -X-direction end, respectively, to form the side surfaces of the pack case 200.

The venting device V may be provided on the side of the pack case 200, i.e., on the side frame 220. In this case, the cover member 300 may be positioned on the side of the side frame 220 to at least partially cover the venting device V.

A plurality of venting devices V and cover members 300 may be provided. In particular, the venting device V may be located on at least some of the plurality of unit walls of the side frame 220. In addition, the venting device V may be formed on two or more unit walls, respectively, or two or more venting devices V may be formed on a single unit wall. For example, referring to FIG. 2, a plurality of venting devices V may be provided on each of the front and rear walls.

In this case, a corresponding cover member 300 may be installed for each of the venting devices V. For example, as illustrated in the exemplary configuration of FIG. 2, four venting devices V may be formed on each of the front and rear walls, and a cover member 300 is provided for each venting device V, so that a total of eight cover members 300 may be included in the battery pack. The plurality of venting devices V and cover members 300 may be arranged symmetrically with respect to the center of the side frame 220.

According to the above-implemented configuration of the present disclosure, in the event of an abnormality in the battery cell 100, high-temperature gases may be discharged in both directions from the pack case 200, thereby facilitating the rapid discharge of gases to the outside of the pack case 200.

Meanwhile, the number and locations of the venting devices V and cover members 300 described with reference to the embodiment in FIG. 2 are merely examples, and various other numbers and locations are possible. For example, although the venting devices V and cover members 300 are provided on the extending walls of the side frame 220 in the X-axis direction, i.e., on the front wall and the rear wall, in FIG. 2, they may also be provided on the extending wall in the Y-axis direction, i.e., on the left wall and the right wall.

The pack case 200 may further include a pack lid 230. The pack lid 230 may be configured to cover the top of the plurality of battery cells 100. To this end, the pack lid 230 may be coupled to the upper portion of the side frame 220 to form the upper surface of the pack case 200.

The pack lid 230 may protect components housed therein, such as the battery cells 100, and prevent venting gas and/or sparks emitted from the battery cells 100 from being discharged to the outside of the pack case 200, particularly to the upper portion. In particular, the pack lid 230 may guide venting gas and sparks toward the venting device V within the inner space of the pack case 200.

In addition, the pack case 200 may further include a cross-beam 240. The cross-beam 240 may be provided to partition the plurality of battery cells 100 or battery modules 10. The cross-beam 240 may be provided between the plurality of battery cells 100 and the side frame 220 on which the venting device V is provided.

For example, the cross-beam 240 may be configured in the form of a partition extending in the left-right direction, and may be interposed between battery modules 10 arranged adjacently in the front-back direction. In addition, the cross-beam 240 may be configured in the form of a partition extending in the front-back direction, and may be interposed between battery modules 10 arranged adjacently in the left-right direction.

Referring to FIGS. 3 to 6, the cover member 300 may be provided between the plurality of battery cells 100 and the venting device V. That is, the cover member 300 may be provided on the inner side of the venting device V. In addition, the cover member 300 may be provided on the inner side of the pack case 200.

Specifically, venting gas and/or sparks generated from the battery cells 100 may travel to the venting device V. That is, a venting path through which venting gas and/or sparks flow may be formed between the plurality of battery cells 100 and the venting device V. In this case, the cover member 300 may be provided to cross the venting path. That is, the cover member 300 may be provided in the venting path to suppress the movement of sparks or the like.

According to the above-implemented configuration of the present disclosure, sparks emitted from the battery cells 100 may be preemptively blocked before reaching the venting device V of the pack case 200, thereby preventing the sparks from being discharged to the outside and more effectively suppressing flames occurring outside the pack case 200.

The cover member 300 may be provided to face the venting device V. In particular, the cover member 300 may be configured to face the side frame 220 on which the venting device V is provided. For example, as disclosed in the embodiment shown in FIG. 5, the cover member 300 may be configured as a plate vertically standing and facing the side frame 220 in parallel.

According to the above-implemented configuration of the present disclosure, venting gas may move to the cover member 300 disposed to face the venting device V and be smoothly discharged to the venting device V through the through-holes H.

Meanwhile, the cover member 300 may be provided to be spaced apart from the side frame 220 and the venting device V by a predetermined distance to secure volume when stretched. In this case, the gap between the cover member 300 and the side frame 220 may be sufficient to prevent sparks or particles from entering. In addition, the cover member 300 may further include a side cover, which may cover the space between the cover member 300 and the side frame 220, on at least one of its four sides.

The cover member 300 may be coupled to the side frame 220 so as to face the venting device V. For example, the cover member 300 may be coupled to the side frame 220 using a fastening member, such as a bolt.

When the cover member 300 is stretched toward the venting device V, the cover member 300 may be moved or deformed toward the venting device V due to the pressure of the venting gas. However, according to the above-implemented configuration of the present disclosure, since the cover member 300 is coupled to the side frame 220, the movement or deformation of the cover member 300 due to the pressure of the venting gas or flame may be suppressed. Therefore, the cover member 300 and the side frame 220 may be stably joined, thereby securing functions of the cover member 300 for blocking sparks and discharging venting gas.

Alternatively, unlike the above embodiment, the cover member 300 may be configured to be integrated with the venting device V. In this case, the venting device V may be mounted to the pack case 200 without the need for a separate assembly of the cover member 300, thereby ensuring assembly efficiency.

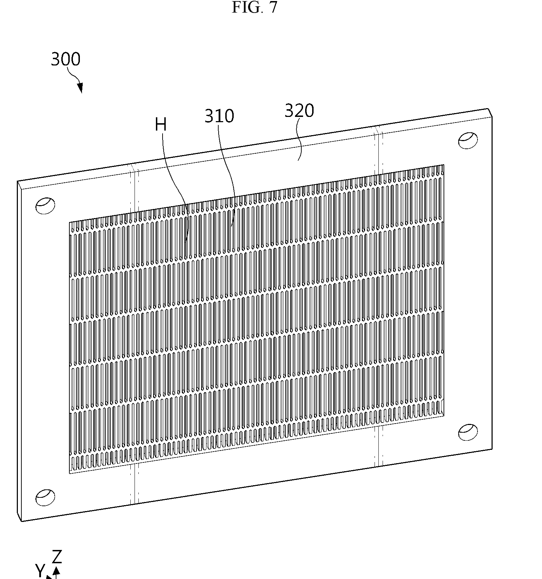

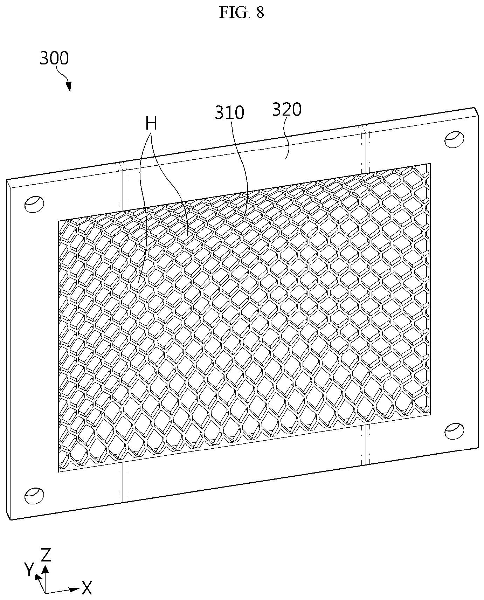

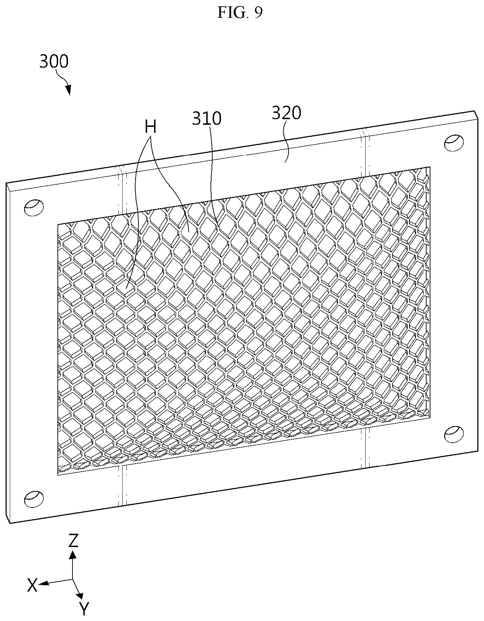

FIG. 7 is a front perspective view of a cover member included in a battery pack according to an embodiment of the present disclosure. In addition, FIG. 8 is a front perspective view illustrating a state where a cover member included in a battery pack is stretched according to an embodiment of the present disclosure, and FIG. 9 is a rear perspective view illustrating a state where a cover member included in a battery pack is stretched according to an embodiment of the present disclosure.

The cover member 300 may be configured in a plate shape. Since the cover member 300 is manufactured in a plate shape, it may be configured to face the venting device V or the side frame 220 in parallel. According to the above-implemented configuration of the present disclosure, the cover member 300 may more easily cover the venting device V.

More specifically, the cover member 300 may include a stretching portion 310 and a fixing portion 320. The stretching portion 310 may be formed of a stretchable material. In addition, the stretching portion 310 may be formed of a material with excellent fire and heat resistance. For example, the stretching portion 310 may include a metal material such as SUS. The stretching portion 310 may be configured to have a thickness of approximately 0.5 t.

In addition, the stretching portion 310 may be configured to allow venting gas to pass therethrough. The stretching portion 310 may be configured to form multiple through-holes H. In this case, the through-hole H may be configured to have a size capable of filtering sparks or flames discharged to the outside of the pack case 200. For example, the through-hole H may be configured to have a width of approximately 0.1 mm to 1 mm.

The shape of the through-hole H may vary. For example, the through-hole H may be configured in a circular or polygonal shape. The through-hole H may be configured in a honeycomb shape.

For example, the stretching portion 310 may be configured in a mesh form. That is, the stretching portion 310 may be configured in a form in which multiple wires are woven together into a net. The stretching portion 310 may capture sparks or flames, thereby delaying or blocking their release to the outside.

According to the above-implemented configuration of the present disclosure, it is possible to minimize sparks or flames from being exposed to the outside of the pack case 200 and quickly discharge venting gas. In addition, according to the above-implemented configuration of the present disclosure, the mesh member 310 may form an insulating air layer, thereby delaying or blocking thermal propagation.

In addition, as disclosed in the embodiment shown in FIG. 8, the stretching portion 310 may be stretched by the pressure of the venting gas when the internal pressure of the pack case 200 increases due to, for example, the through-holes H being blocked by sparks. Accordingly, the stretching portion 310 may be stretched, thereby increasing the area of the through-hole H.

According to the above-implemented configuration of the present disclosure, when the internal pressure of the pack case 200 increases, the increased area of the through-hole H allows the venting gas to be quickly and smoothly discharged to the outside. Accordingly, the internal pressure of the pack case 200 may be reduced, thereby delaying or suppressing thermal runaway.

The fixing portion 320 may be configured to secure the stretching portion 310. The fixing portion 320 may be configured to secure the edges of the stretching portion 310. For example, the fixing portion 320 may be configured in a frame shape.

In addition, the fixing portion 320 may be configured as a rigid body. The fixing portion 320 may be made of a material with excellent fire and heat resistance. For example, the fixing portion 320 may include a metal material such as SUS. The thickness of the fixing portion 320 may be 1 t or more.

Accordingly, the fixing portion 320 may be prevented from being damaged by heat such as venting gas or flame, thereby stably fixing the stretching portion 310 and maintaining the shape of the stretching portion 310.

Meanwhile, the cover member 300 may be configured as a composite structure. For example, the fixing portion 320 may be provided on both sides of the stretching portion 310 in the front-back direction, thereby configuring a cover member 300 in a triple structure.

According to the above-implemented configuration of the present disclosure, the fixing portion 320 may secure the stretching portion 310 from both sides, thereby ensuring structural stability when the stretching portion 310 is stretched by the pressure of the venting gas.

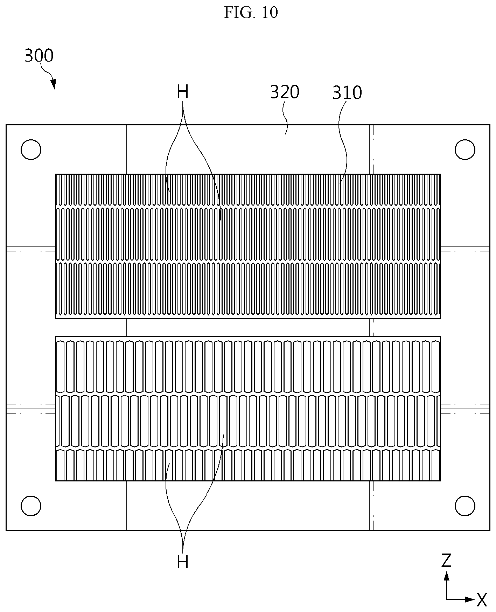

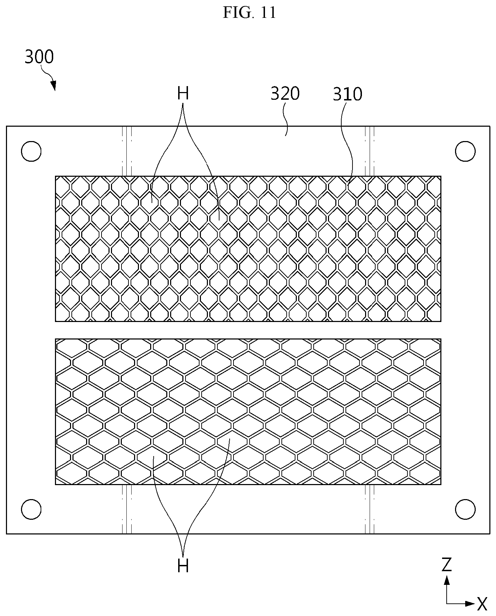

FIG. 10 is a front view of a cover member included in a battery pack according to another embodiment of the present disclosure, and FIG. 11 is a front view illustrating a state where a cover member included in a battery pack is stretched according to another embodiment of the present disclosure.

The cover member 300 may be configured such that the density of the multiple through-holes H at least partially varies gradually. That is, the cover member 300 may be configured such that the areas of the multiple through-holes H at least partially differ depending on portions. For example, the area of the through-hole H in a portion of the cover member 300 facing the venting device V may be configured to be large, whereas the area of the through-hole H in the remaining portions may be configured to be small. In this case, the density or area of the through-holes H may be configured to be radially differentiated.

In particular, the cover member 300 may be configured such that the density of the multiple through-holes H increases at least partially from the bottom to the top. That is, the cover member 300 may be configured such that the area of the multiple through-holes H decrease at least partially from the bottom to the top.

For example, as disclosed in the embodiments illustrated in FIGS. 10 and 11, the cover member 300 may be configured such that the density of the multiple through-holes H at the upper portion is greater than the density of the multiple through-holes H at the lower portion. That is, the sizes of the multiple through-holes H at the upper portion may be smaller than the sizes of the multiple through-holes H at the lower portion. Accordingly, the cover member 300 may be configured to more densely cover the upper portion of the venting device V.

Specifically, sparks emitted from the battery cell 100 may have a high temperature and may tend to flow upward. Therefore, as disclosed in the above embodiment, when the area of the through-hole H provided at the upper portion of the cover member 300 is configured to be smaller than the area of the through-hole H provided at the lower portion, sparks having a strong tendency to move straight may inevitably collide with the cover member 300, thereby more reliably suppressing external discharge of the sparks. At the same time, the venting gas may be smoothly discharged to the outside of the pack case 200 due to internal pressure through the through-holes H having relatively large areas.

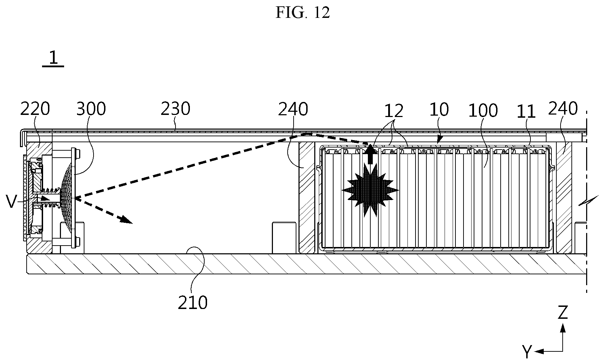

FIG. 12 is a drawing illustrating the direction in which venting gas and sparks are emitted within a battery pack according to another embodiment of the present disclosure.

Referring to FIGS. 2 and 12, a plurality of battery cells 100 may be modularized into one or more battery modules 10. That is, the battery pack 1 according to the present disclosure may include one or more battery modules 10. In addition, the plurality of battery cells 100 may be included as components of one or more battery modules 10. In this case, the plurality of battery cells 100 included in the battery module 10 may be electrically connected to each other.

In addition, a plurality of battery modules 10 may be provided in a pack case 200. That is, the battery pack 1 according to the present disclosure may include a plurality of battery modules 10, and the plurality of battery cells 100 included in the battery pack 1 may be divided and included within the plurality of battery modules 10.

In particular, the battery pack 1 according to the present disclosure may include a module case 11. The module case 11 may be configured to have an inner space so that at least some of the plurality of battery cells 100 may be accommodated within the inner space. In particular, the module case 11 may be included in each battery module 10, may group the plurality of battery cells 100 into a plurality of battery modules 10, and may serve as a boundary that physically confines the inner space of each battery module 10.

In addition, although not shown in the drawing, the battery module 10 may include a busbar assembly and/or a module terminal electrically connected to the plurality of battery cells 100 accommodated therein.

The battery module 10 may include a venting hole 12. The venting hole 12 may be configured to allow gas generated from the battery cells 100 accommodated within the module case 11 to be discharged to the outside of the module case 11.

Specifically, the venting hole 12 may be provided in the module case 11 to enable directional venting in a specific direction. For example, as illustrated in FIG. 12, the venting hole 12 may be provided at the top of the module case 11. According to the above-implemented configuration, venting gas and/or sparks may be guided to be discharged to the upper side of the battery module.

According to the above-implemented configuration of the present disclosure, as indicated by the dotted arrow in FIG. 12, venting gas or sparks may be guided to the upper side of the pack case 200. As a result, when venting gas or sparks move along the upper inner surface of the pack case 200 toward the venting device V, the flow may be more reliably blocked by the cover member 300 that more densely covers the upper portion of the venting device V, as disclosed in the embodiments shown in FIGS. 10 and 11. Therefore, the discharge of the sparks to the outside of the pack case 200 may be more effectively suppressed.

In addition, the cross-beam 240 may be provided to be spaced apart from the pack lid 230 by a predetermined distance. That is, the cross-beam 240 may be configured such that at least a portion of the upper end does not contact the lower surface of the pack lid 230 and is spaced apart by a predetermined distance.

According to the above-implemented configuration, heat or flames may be prevented from directly flowing between battery cells 100 or battery modules 10 whose storage spaces are separated by the cross-beam 240. In addition, with the above configuration, due to the space between the cross-beam 240 and the pack lid 230, gases or sparks generated from the battery cells 100 may be further induced to move to the upper side within the inner space of the pack case.

For example, as indicated by the dotted arrow in FIG. 12, gas or sparks may move to the space between the cross-beam 240 and the pack lid 230 and be reflected by the pack lid 230 or flow along the lower surface of the pack lid 230 toward the venting device V, thereby reaching the cover member 300 covering the upper portion of the venting device V. According to the above-implemented configuration of the present disclosure, the cover member 300 may more reliably block sparks emitted from the battery cell 100.

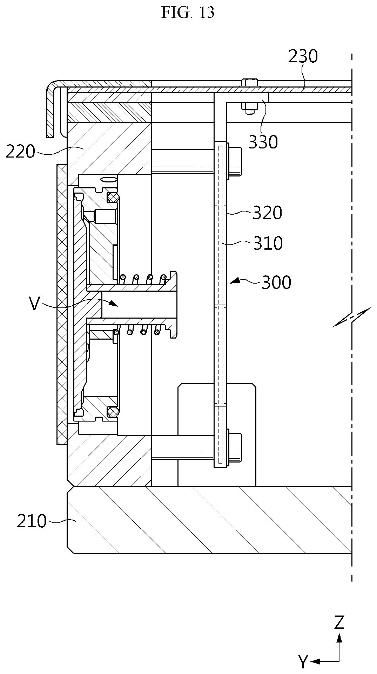

FIG. 13 is a partially cross-sectional view of a battery pack according to another embodiment of the present disclosure, which may be a cross-sectional view taken along line I - I' in FIG. 1.

Referring to FIG. 13, the cover member 300 may be configured to be connectable to the pack lid 230. In this case, the cover member 300 may be fixed to the pack lid 230 by bolting. Alternatively, the cover member 300 may be manufactured to be integrated with the pack lid 230.

According to the above-implemented configuration of the present disclosure, since the cover member 300 is pre-assembled to the pack lid 230, when the pack lid 230 is coupled to the side frame 220, the cover member 300 may be automatically installed on the venting device V of the side frame 220. Accordingly, a separate process of joining the cover member 300 to the side frame 220 may be omitted. Therefore, it is possible to reduce time and cost in manufacturing the battery pack 1, thereby improving productivity.

More specifically, the cover member 300 may include a lead-coupling portion 330. The lead-coupling portion 330 may be configured to extend from the upper end of the fixing portion 320. Specifically, the lead-coupling portion 330 may be configured to bend and extend horizontally from the upper end of the fixing portion 320 so as to be in direct contact with the pack lid 230. That is, the lead-coupling portion 330 may be configured to form a right angle with the fixing portion 320. The lead-coupling portion 330 may be configured in a plate shape and may be coupled to the pack lid 230. The lead-coupling portion 330 may be bolted and fixed to the pack lid 230.

According to the above-implemented configuration of the present disclosure, the cover member 300 and the pack lid 230 may be coupled by a simple fixing structure. In addition, in this case, assembly of the battery pack may be facilitated, and the inner space occupied by the cover member 300 may be minimized in the pack case 200. Furthermore the effect of blocking sparks and the like for the venting device V may be more reliably achieved.

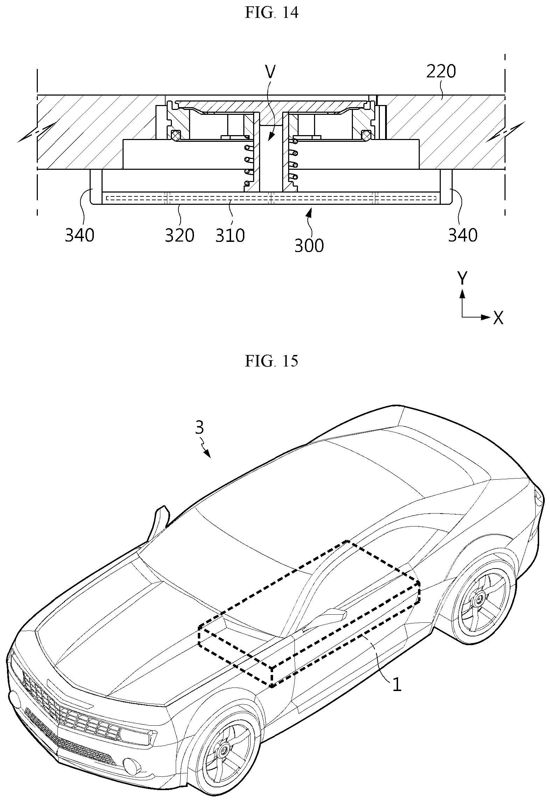

FIG. 14 is a cross-sectional view of a battery pack when viewed from above according to another embodiment of the present disclosure.

At least one side of the cover member 300 may be configured to bend toward the inner surface of the pack case 200. For example, as disclosed in the embodiment illustrated in FIG. 14, the cover member 300 may include a bent portion 340.

The bent portion 340 may be configured to extend from at least one side of the fixing portion 320. According to an embodiment of the present disclosure, the bent portion 340 may be bent to extend from both sides of the fixing portion 320 toward the side frame 220. For example, as illustrated in the embodiment in FIG. 14, the bent portion 340 may be configured to be bent from both left-right (X-axis) direction ends of the fixing portion 320 toward the rear (+Y-axis direction). The bent portion 340 may be configured to block the side surface of the venting device V.

According to the above-implemented configuration of the present disclosure, the cover member 300 may block sparks directed not only toward the front surface of the venting device V but also toward the side surface, thereby more effectively preventing sparks from being discharged to the outside of the pack case 200.

In addition, referring to FIG. 14, the bent portion 340 may be configured such that its end is in contact with the side frame 220. That is, the gap between the fixing portion 320 and the inner surface of the side frame 220 may be configured to be equal to the length by which the bent portion 340 extends from the fixing portion 320.

According to the above-implemented configuration of the present disclosure, sparks may be reliably prevented from being discharged through the gap between the fixing portion 320 and the side frame 220.

In addition, according to the above-implemented configuration of the present disclosure, the cover member 300 may be reliably supported on the side frame 220 by the bent portion 340, thereby ensuring rigidity when an impact occurs on the pack case 200. In addition, the gap between the fixing portion 320 and the inner surface of the side frame 220 may be maintained. Furthermore, in this case, the angle between the fixing portion 320 and the side frame 220 may remain constant without deformation. Therefore, the venting gas may be smoothly discharged to the outside of the pack case 200 through the venting device V, and the spark-blocking effect of the cover member 300 may also be stably secured.

FIG. 15 is a schematic perspective view of a vehicle including a battery pack according to an embodiment of the present disclosure.

Referring to FIG. 15, a vehicle 3 according to an embodiment of the present disclosure may include one or more battery packs 1 according to the aforementioned embodiments. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may operate by receiving power from the battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells;
a pack case configured to accommodate the plurality of battery cells and having a venting device provided on at least one side to discharge venting gas generated from the battery cell to an outside; and
a cover member configured to at least partially cover the venting device and having multiple through-holes formed to allow the venting gas to pass therethrough, wherein an area of the multiple through-holes is configured to at least partially vary.

2. The battery pack of claim 1,
wherein the cover member is configured to suppress movement of sparks generated from the battery cell toward the venting device.

3. The battery pack of claim 1,
wherein the cover member is configured such that the area of the multiple through-holes increases due to pressure of the venting gas.

4. The battery pack of claim 1,
wherein the cover member is configured to be stretchable due to pressure of the venting gas.

5. The battery pack of claim 1,
wherein the cover member is configured to stretch and at least partially expand toward the venting device.

6. The battery pack of claim 1,
wherein the cover member is provided between the plurality of battery cells and the venting device.

7. The battery pack of claim 1,
wherein the pack case comprises
a base frame on which the plurality of battery cells are seated, and
a side frame extending upward from the base frame and having the venting device, and
wherein the cover member is configured to face the side frame having the venting device.

8. The battery pack of claim 1,
wherein the cover member comprises
a stretching portion configured to form the multiple through-holes, and
a fixing portion configured to secure the stretching portion.

9. The battery pack of claim 8,
wherein the stretching portion is configured in a mesh form.

10. The battery pack of claim 1,
wherein the cover member is configured
such that density of the multiple through-holes at least partially varies gradually.

11. The battery pack of claim 1,
wherein the cover member is configured
such that density of the multiple through-holes at least partially increases from bottom to top.

12. The battery pack of claim 1,
further comprising a module case configured to accommodate the plurality of battery cells in an inner space and having a venting hole formed at a top to communicate with the inner space.

13. The battery pack of claim 1,
wherein the pack case comprises
a pack lid configured to cover a top of the plurality of battery cells, and
wherein the cover member is configured to be connectable to the pack lid.

14. The battery pack of claim 1,
wherein at least one side of the cover member is configured to be bent toward an inner surface of the pack case.

15. A vehicle comprising a battery pack according to any one of claims 1 to 14.
